# EUROPEAN PATENT APPLICATION

(11) **EP 4 821 615 A1**
(43) Date of publication of application: **14.10.2026**
(21) Application number: 25275028.6
(22) Date of filing: 07.04.2025
(51) Int. Cl.: B21D 22/14, B21D 51/10, B21J 7/14, B21K 21/06, B23P 15/22, B21D 51/54

(54) **METHOD OF MANUFACTURE OF A PROJECTILE SHELL**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method of manufacture of a projectile shell (100). The shell (100) may comprise a tail section (200). The method may comprise the steps of providing a tail section workpiece (210) formed from a **first plate preform (230)** and forming the tail section (200) from the tail section workpiece (210) using a hub forming process in advance of a spin forming process.

## Description

### FIELD

The present disclosure relates to a method of manufacture of a projectile shell.

### BACKGROUND

Projectile shells are a type of ammunition used in weapon systems such as artillery weapons, self-propelled guns and tanks. The shells are designed to be fired from a barrel of the weapon system and travel through the air to hit a target.

Conventionally the manufacture of shells comprises a forging process. For example, billets may be placed into forging presses where they are shaped into the basic form of a shell body through a series of high-pressure operations.

While a conventional/traditional forging process provides an acceptable final product, the combination of equipment needed to execute a forging process (e.g. furnaces and presses) is generally large, takes a long time to set up and requires access to significant energy supply. A forge needs to be constructed in a location with sufficient space which provides a stable environment (e.g. in a location where it can remain long term, with certainty of energy and water quality supply). This makes it difficult for shells to be manufactured in conflict zones, as forges are difficult to relocate (should the need arise) and difficult to operate because of their resource requirements (e.g. high energy and sufficient quality water).

Despite this, and because the material properties of forged products are known to be suitable for shells, there is a significant bias towards the use of forging in this technical field.

Hence a method of manufacture of a projectile shell which overcomes the issues of manufacturing processes of the related art which are reliant on conventional/traditional forging for shaping the shell, is highly desirable.

### SUMMARY

According to the present disclosure there is provided an apparatus and system as set forth in the appended claims. Other features of the invention will be apparent from the dependent claims, and the description which follows.

There may be provided a method of manufacture of a projectile shell (100). The shell (100) may comprise a tail section (200). The method may comprise the step of providing a tail section workpiece (210) formed from a **first plate preform (230).** The method may comprise the step up forming the tail section (200) from the tail section workpiece (210) using a hub forming process in advance of a spin forming process.

The temperature of the tail section workpiece (210) may be controlled to a predetermined tail hub forming schedule during the hub forming process. The temperature of the tail section workpiece (210) may be controlled to a predetermined tail spin forming schedule during the spin forming process.

The shell (100) may comprise a body section (300). The method may comprise the step of providing a body section workpiece (310) formed from a **first tube preform (320).** The method may comprise the step of forming the body section (300) from the body section workpiece (310) using a first forming process.

The first forming process may be a flow forming process. The temperature of the body section workpiece (310) is controlled to a predetermined body flow forming schedule during the flow forming process.

The first forming process may be a radial forging process. The temperature of the body section workpiece (310) may be controlled to a predetermined body radial forging schedule during the radial forging process.

The shell (100) may comprise a body section (300). The method may comprise the step of providing a body section workpiece (310) formed from a **fourth plate preform (340).**

The method may comprise the step of forming the body section (300) from the body section workpiece (310) using a spin forming process in advance of a flow forming process or a radial forging process. The temperature of the body section workpiece (310) may be controlled to a predetermined body spin forming schedule during the spin forming process. The temperature of the body section workpiece (310) may be controlled to a predetermined body flow forming schedule during the flow forming process or controlled to a body radial forging schedule during the radial forging process.

The shell (100) may comprise a nose section (400). The nose section (400) may be formed integrally with the body section (300).

The shell (100) may comprise a nose section (400). The method may comprise the step of providing a nose section workpiece (410) formed from a **second tube preform (430).**

The method may comprise the step of forming the nose section (400) from the nose section workpiece (410) using a second forming process. The temperature of the nose section workpiece (410) may be controlled to a predetermined nose forming schedule during the second forming process.

The second forming process may be a flow forming process. The temperature of the nose section workpiece (410) may be controlled to a predetermined nose flow forming schedule during the flow forming process.

The second forming process may be a radial forging process. The temperature of the nose section workpiece (410) may be controlled to a predetermined nose flow forging schedule during the radial forging process.

The shell (100) may comprise a nose section (400). The method may comprise the step of providing a nose section workpiece (410) formed from a **second plate preform (440).**

The method may comprise the step of forming the nose section (400) from the nose section workpiece (410) using a hub forming process in advance of a spin forming process. The temperature of the nose section workpiece (410) may be controlled to a predetermined nose forming schedule during the hub forming process. The temperature of the nose section workpiece (410) may be controlled to a predetermined nose spin forming schedule during the spin forming process.

The shell (100) may comprise a liner section (500) for being located within the body section (300). The method may comprise the step of providing a liner section workpiece (510) formed from a **third plate preform (530).**

The method may comprise the step of forming the liner section (500) from the liner section workpiece (510) using a hub forming process in advance of a spin forming process.

The temperature of the liner section workpiece (510) may be controlled to a predetermined liner forming schedule during the hub forming process. The temperature of the liner section workpiece (510) maybe controlled to a predetermined liner spin forming schedule during the spin forming process.

The tube preform (320, 430) may be formed by an extrusion or tube drawing process. The plate preform (230, 440) may be circular.

The workpiece may be machined after the preform (230, 320, 430, 440) is formed, the machining being controlled to define a final geometry.

The body section (300) and tail section (200) may be fixed together to form a projectile shell sub-assembly (110).

The nose section (400), body section (300) and tail section (200) may be fixed together to form a projectile shell sub-assembly (110).

Hence there is provided a method of manufacture of a projectile shell which overcomes the issues of manufacturing processes of the related art by avoiding the need for a forge for shaping the shell, relying instead on alternative machining processes.

### BRIEF DESCRIPTION OF THE FIGURES

Embodiments of the invention will now be described by way of example only with reference to the figures, in which:
Figure 1 shows an example of a projectile shell assembly according to present disclosure;
Figures 2 to 4 show exploded views of the projectile shell shown in figure 1;
Figure 5 shows a further example of a projectile shell assembly according to present disclosure;
Figures 6 to 8 show exploded views of the projectile shell shown in figure 5;
Figure 9 shows an additional example of a projectile shell assembly according to present disclosure;
Figures 10 to 12 show exploded views of the projectile shell shown in figure 9;
Figure 13 illustrates a process for the creation of a component from a tube preform using a method of the present disclosure;
Figure 14 illustrates a process for the creation of a component from a plate preform using a method of the present disclosure;
Figures 15-1 to 15-4 illustrate steps in a creation of a nose section according to the method of the present disclosure starting from a tube preform;
Figures 16-1 to 16-4 illustrate steps in a creation of a nose section according to the method of the present disclosure starting from a plate preform;
Figures 17-1 to 17-4 illustrate steps in a creation of a combined nose and body section according to the method of the present disclosure starting from a tube preform;
Figures 18-1 to 18-4 illustrate steps in a creation of a body section according to the method of the present disclosure starting from a plate preform;
Figures 19-1 to 19-3 illustrate steps in a creation of a body section according to the method of the present disclosure starting from a tube preform;
Figures 20-1 to 20-3 illustrate steps in a creation of a tail section according to the method of the present disclosure starting from a plate preform;
Figures 21-1 to 21-6 illustrate steps in a creation of a tail section according to the method of the present disclosure starting from a plate preform;
Figures 22-1 to 22-2 illustrate steps in a creation of a first part of a liner section according to the method of the present disclosure starting from a plate preform;
Figures 23-1 to 23-2 illustrate steps in a creation of a second part of a liner section according to the method of the present disclosure starting from a plate preform;
Figure 24 illustrates a liner section assembled from the liner section parts illustrated in figures 22-1 to 22-2 and figures 23-1 to 23-2;
Figure 25 illustrates an example of mandrel for use in the creation of a nose section; and
Figure 26 illustrates a further example of mandrel for use in the creation of a nose section.

### DETAILED DESCRIPTION

The present disclosure relates to a method of manufacture of a shell. The present disclosure relates to a method of manufacture of a projectile shell. The present disclosure relates to a projectile shell. The present disclosure relates to a shell (for example a shell for an artillery weapon, self-propelled gun and/or tank). The shell may be an artillery shell. The present disclosure relates to a shell configured to be fired from a barrel of a gun. The present disclosure relates to a method of assembly of a shell.

A shell according to the present disclosure comprises sections (for example a nose section and/or body section) which may be hollow and contain a payload, for example (but not limited to) a high-explosive, incendiary or illumination payload. They may also comprise a fuse that ignites the payload. In some examples the shell may additionally comprise a propellant, which is a separate charge that ignites to propel the shell out of a gun barrel. In other examples the shell may be provided separately to a propellant (e.g. the shell and propellant are provided separately in the weapon from which the shell is fired.)

The method of the present disclosure may be used for the manufacture shells having a wide range of diameters (i.e. calibre). The method of the present disclosure may be used for the manufacture shells having a diameter (i.e. calibre) in the range of 25mm to 180mm. The method of the present disclosure may be used for the manufacture shells having a diameter in the range of 30mm to 155mm. The method of the present disclosure may be used for the manufacture shells having a diameter in the range of 105mm to 155mm.

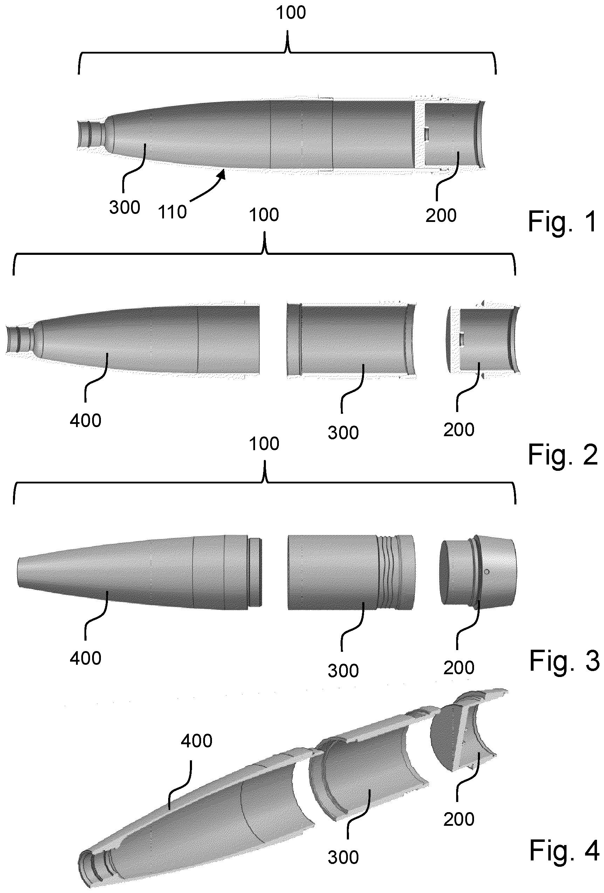

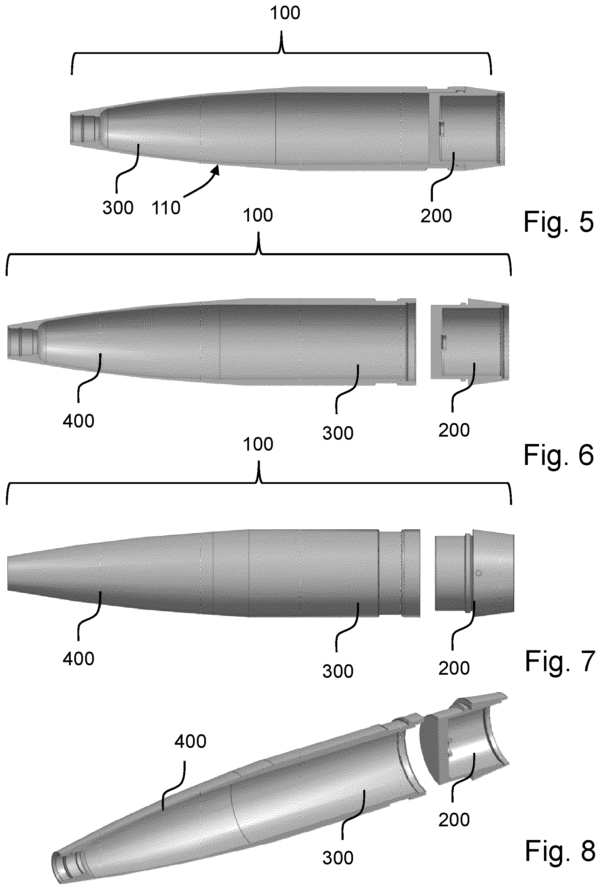

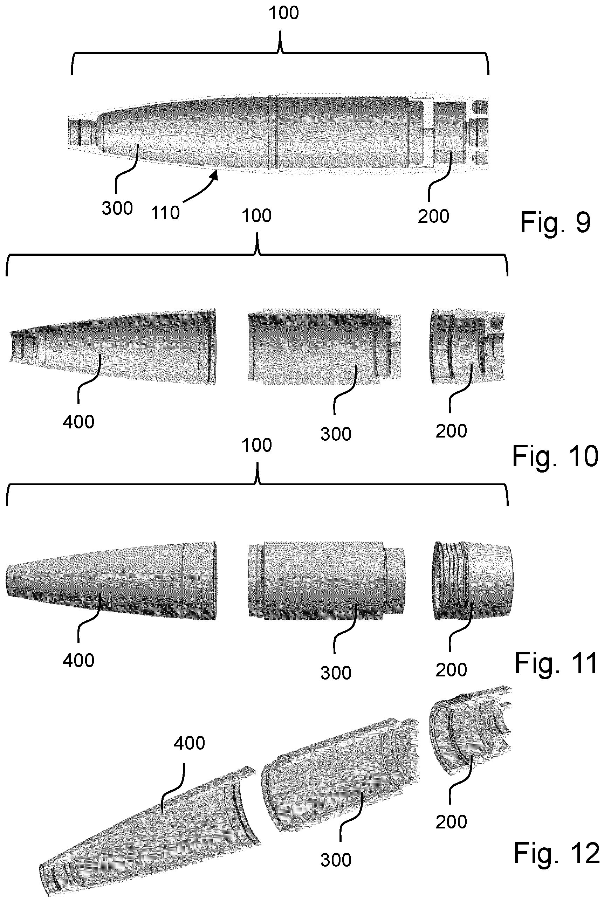

Figures 1, 5, 9 show examples of a projectile shell assembly (i.e. shell 100) according to present disclosure. Figures 2 to 4 show exploded views of the projectile shell 100 shown in figure 1. Figures 6 to 8 show exploded views of the projectile shell 100 shown in figure 5. Figures 10 to 12 show exploded views of the projectile shell 100 shown in figure 9.

The shell assembly 100 may comprise a combination of a tail section 200, a body section 300 and/or a nose section 400. The shell 100 may comprise a liner section 500 for being located within the body section 300. The shell assembly 100 may comprise a liner section 500.

As will be described, the different sections 200, 300, 400, 500 may be formed separately, from different or the same material and/or from different or the same preform type (e.g. plate and tube).

In some examples the body section 300 comprises an integrally formed body section 300 and nose section 400, for example as shown in figure 5 to 8 and figures 17-1 to 17-4). That is to say, the shell 100 may comprise a nose section 400, and the nose section 400 maybe formed integrally with the body section 300.

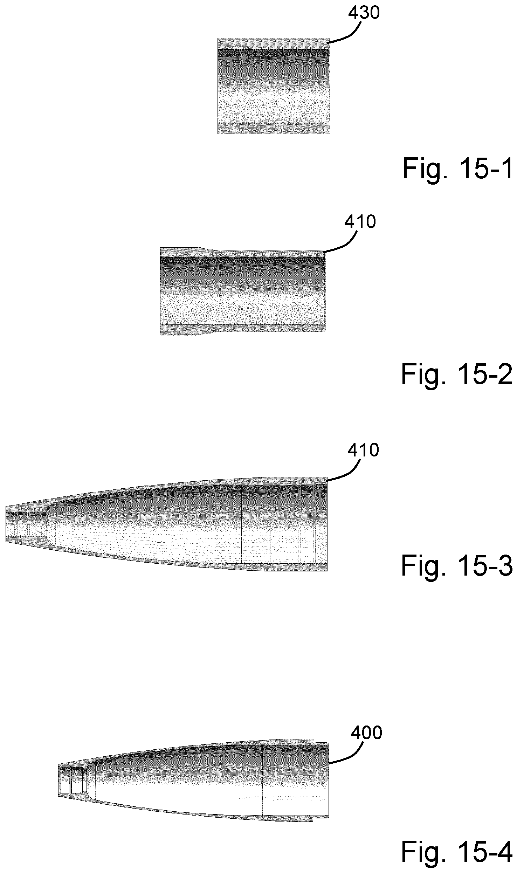

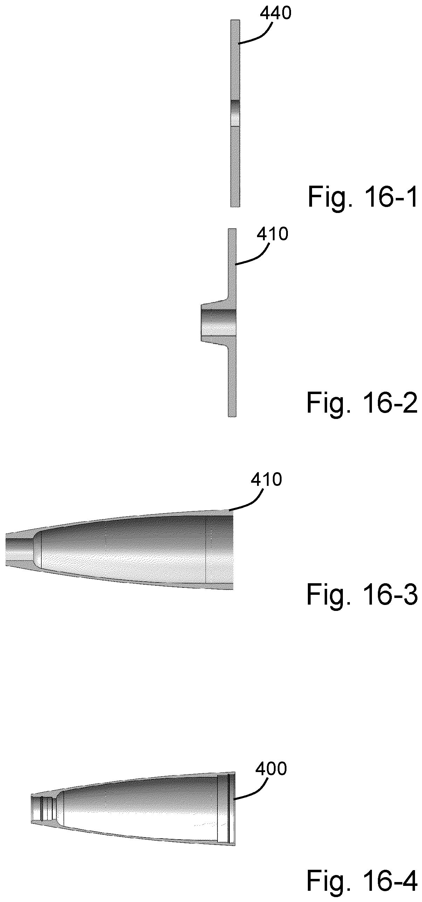

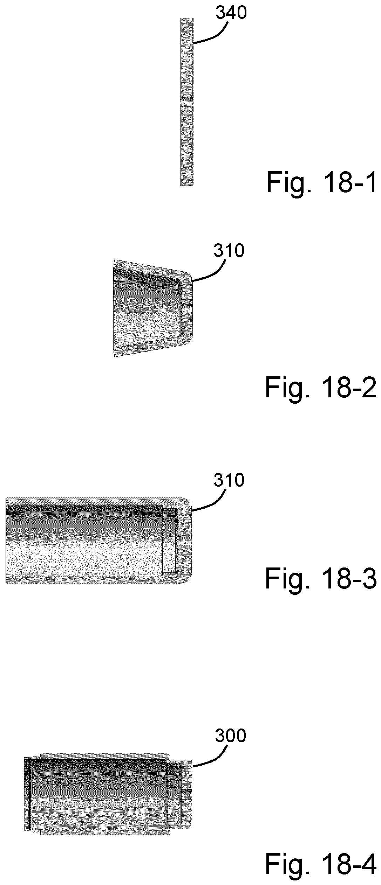

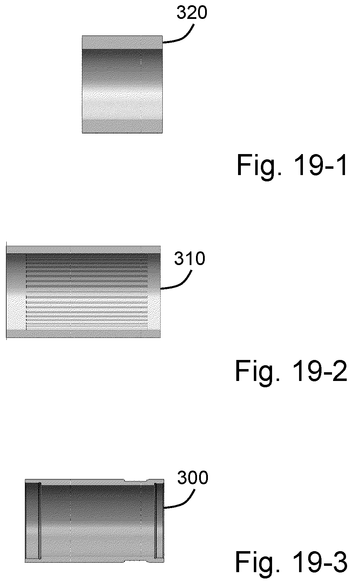

In other examples, the nose section 400 may be formed separately from the body section 300, for example as illustrated in figures 15-1 to 15-4 (nose section), figures 16-1 to 16-2 (nose section), figures 18-1 to 18-4 (body section) and figures 19-1 to 19-4 (body section).

The different sections of the assembly may be joined by any appropriate means, for example with co-operating screw threads, by welding or other coupling or bonding method.

The nose section 400, body section 300 and/or tail section 200 may be made to any required configuration by the method of the present disclosure, and combined to form a shell assembly as required.

For example, as illustrated in figures 1 to 4 and figures 9 to 12, the nose section 400, body section 300 and tail section 200 may be fixed together to form a projectile shell sub-assembly 110.

Alternatively, and as illustrated in figures 5 to 8, the body section 300 (which comprises an integrally formed body section 300 and nose section 400) and tail section 200 may be fixed together to form a projectile shell sub-assembly 110.

The tail section 200 may be fitted to the trailing edge end of the main body section 300. The tail section 200 may comprise a chamber for propellant and/or features for stabilising the shell assembly 100 when in flight. Alternatively, or additionally the tail section 200 may form a trailing end cap of the shell assembly, for example to reinforce the trailing edge end of the body section 300.

The body section 300 and/or nose section 400 may define a chamber for a payload. The nose section 400 and/or combined nose and body section 300 may increase in diameter along its length from a leading edge to a coupling end where it is coupled/joined to the next component in the assembly.

The liner section 500 may be fitted within the chamber defined by the body section 300 and/or nose section 400, and the payload may be fitted within the liner 500. Hence the liner section 500 may be located within the body section 300. Put another way, the liner 500 may line the chamber defined by the body section 300 and/or nose section 400 (for example to provide a seal and/or reinforce the shell assembly. The liner 500 may be bonded to the body section, for example by welding or any other appropriate technique.

In some examples the shell assembly 100 comprises tail section 200, a body section 300 and a nose section 400 provided in series along a longitudinal axis (for example as shown in figures 1 to 4 and figures 9 to 12).

In some examples the shell assembly 100 comprises a tail section 200 and a body section 300 provided in series along a longitudinal axis (for example as shown in figures 1 to 4 and figures 9 to 12).

The body section 300 and/or nose section 400 may be manufactured from a tube preform. The tube preform may be hollow and/or cylindrical.

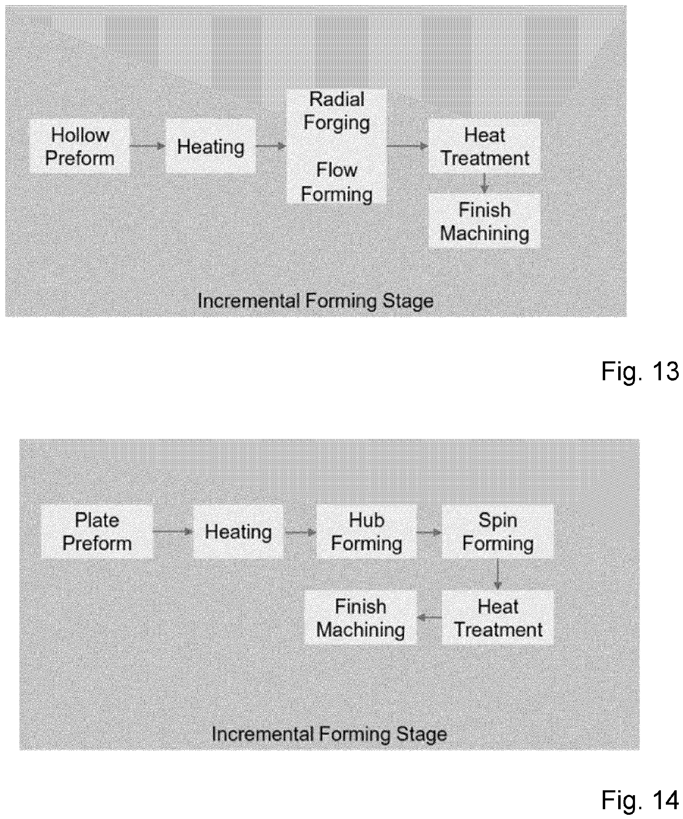

By way of non-limiting example, and as illustrated in figure 13, tube preforms may be worked in incremental forming stages which involve radial forging and flow forming in elevated temperatures (for example as illustrated in figures 15-1 to 15-4, figures 17-1 to 17-4, figures 19-1 to 19-3). These processes are utilized to achieve closer dimensional accuracy and components might need stress relieving before finish machining and final heat treatment to achieve the right hardness and toughness processes. The final stage may involve finish machining to achieve the final dimension and required surface finish. This example process provides efficient material utilization due to the hollow preform starting shape, improved mechanical properties through controlled forging and flow forming processes, and reduced machining time and costs due to near-net shape forming.

The tail section 200, body section 300, nose section 400 and/or liner section 500 may be manufactured from a plate preform. In this context "plate" may be taken to mean a material provided as a sheet. The sheet may be provided in any appropriate configuration, for example a circular (e.g. disc) or polygonal (e.g. square) shape.

By way of non-limiting example, figure 14 illustrates a process for creating a section from a plate preform. Creating a disk shape preform may be achieved by cutting disks from a rolled plate or from a solid bar. The plate preform will go through hub forming and spin forming processes to achieve near net shape formed component (for example as illustrated in figures 16-1 to 16-4, figures 18-1 to 18-4, figures 20-1 to 20-3, figures 21-1 to 21-6, figures 22-1 to 22-1 and figures 23-1 to 23-2). These processes will improve the mechanical properties and will give the same dimensional accuracy on every part (for example because the forming may be applied using CNC controlled equipment). As the material goes through severe deformation during these processes, subsequent stress relieving and heat treatment will be required, followed by a finish machining stage. In this example hub forming and spin forming processes are to create cup shape components rather than machining them from solid bar. Also, creating near net-shape formed component will reduce the machining time and cost on these products. Less machining means lower cycle times, higher output and lower cost.

Hence in all examples according to the present disclosure, the manufacturing processes comprise incremental forming processes to achieve a near net shape formed component with improved mechanical properties and enable high precision and quality.

The method of the present disclosure may comprise a hub forming process, a spin forming process, a flow forming process, a radial forging process and/or a shear forming process. The concepts behind these techniques are well known in the art, and hence need not be described in detail the present application. As the processes may be known by different names, each is summarised below.

**Hub Forming** is an incremental forming process. In this process, rollers deform a round plate or cylindrical preform around a mandrel in such a way that material toward the centre of the work-piece is thickened to produce a "boss" or "hub". Hence the interior geometry of the workpiece will be determined by the mandrel and achieve a net shape with excellent surface finish. The Hub Forming process is known to produce high quality components and exhibits various advantages over other conventional processes. For example it may be cost efficient e.g. because this method results in reduced material consumption compared to machine techniques, result in high productivity (for example because it lends itself to continuous automated production); reduced tool wear and high-quality surface finish and dimensional accuracy.

**Spin forming process (e.g. conventional metal spinning)** is an incremental sheet metal forming process whereby a blank is clamped against a mandrel and gradually formed onto its surface by a roller (or rollers) in a series of forming steps. A variety of axisymmetric forms can be manufactured. Conventionally, there is no deliberate reduction in material wall thickness if geometries are more challenging, then a level of thickness reduction is possible. Key benefits of the process include the ability to produce complex profiles, may be operate to produce quick cycle times and may have low input material costs.

**Shear forming** is an incremental forming process whereby a sheet or plate metal blank is clamped against a mandrel and gradually formed onto its surface by a roller in a single step. Axisymmetric, conical components can be manufactured to near-net-shape and require minimal machining operations after forming. Key benefits of the process include low input preparation costs, formed surface can be left as-shear formed - reduced machining time / cost, improved material utilisation.

**Flow forming** is an incremental forming process whereby a cylindrical work-piece (e.g. tube) is formed between a mandrel and a series of rollers (typically 3 or 4) to produce a hollow axisymmetric condition of supply. The work-piece material is compressed radially onto the mandrel and increases in length. Key benefits of the process are that up to 80% of the surface can typically be left as flow formed, reduced input material requirements, increased tensile strength of formed material, and can produce cylinders with smaller wall thicknesses than machining processes.

**Radial forging** involves feeding a pre-formed bar of material between a set of axisymmetrically positioned hammers. The hammers strike the material, as it is rotated on a chuck, incrementally altering the shape of the material. Radial forging may involve the use of hammers to deform the material around a shaped mandrel. Radial forging can be applied to materials in varying states: cold-working, semi-hot and hot-working dependant on the material being forged and the desired geometry. Key benefits of the process include near-net shape hollow or solid shaft forging, ability to form internal profiles and splines, very quick cycle times and improved mechanical properties (e.g. providing opportunities for lightweighting). Radial forging may utilise a CNC machine (for example a 3/5-axis CNC machine) to deform material at lower temperatures, using less energy, and generating less waste that possible with conventional/traditional forging. Hence radial forging equipment may thus be considerably smaller than conventional forging equipment, and configured in an entirely different way to conventional/traditional forging, and so is a much more agile arrangement (e.g. easy to relocate). Indeed, despite its name, radial forging is a process which differs considerably from conventional/traditional forging. Conventional/traditional forging forging/pressing requires very high temperatures and large pressing equipment that produces high waste per part.

The manufacturing processes may be executed with the material in a cold (e.g. unheated) state, or be executed in a hot (e.g. heated) state.

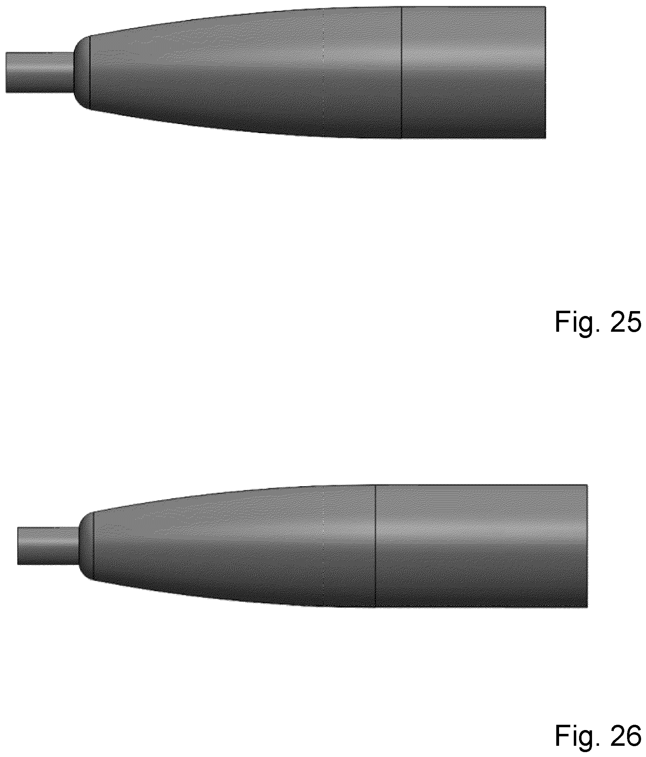

Figures 15 to 23 show a summary of the forming steps of each section. Details of tooling (forming tools) are omitted. The tooling used may be of a conventional kind. Non limiting examples of mandrels that may be used are shown in figures 25, 26.

As illustrated in figures 15-1 to 15-4, the method may comprise the step of providing a nose section workpiece 410 formed from a **second tube preform 430.** The method may comprise the step of forming the nose section 400 from the nose section workpiece 410 using a second forming process. The temperature of the nose section workpiece 410 may be controlled to a predetermined nose forming schedule during the second forming process. The second forming process may be a flow forming process. The temperature of the nose section workpiece 410 may be controlled to a predetermined nose flow forming schedule during the flow forming process. The second forming process may be a radial forging process. The temperature of the nose section workpiece 410 is controlled to a predetermined nose flow forging schedule during the radial forging process.

Hence figures 15-1 to 15-4 illustrate steps in a creation of a nose section according to the method of the present disclosure starting from a tube preform, for example by utilising a radial forging process or a flow forming process.

As illustrated in figures 16-1 to 16-4 the method may comprise the step of providing a nose section workpiece 410 formed from a **second plate preform 440.** The method may comprise the step of forming the nose section 400 from the nose section workpiece 410 using a hub forming process in advance of a spin forming process. The temperature of the nose section workpiece 410 may be controlled to a predetermined nose forming schedule during the hub forming process. The temperature of the nose section workpiece 410 may be controlled to a predetermined nose spin forming schedule during the spin forming process.

Hence figures 16-1 to 16-4 illustrate steps in a creation of a nose section according to the method of the present disclosure starting from a plate preform, for example by utilising a hub forming process and a spin forming process.

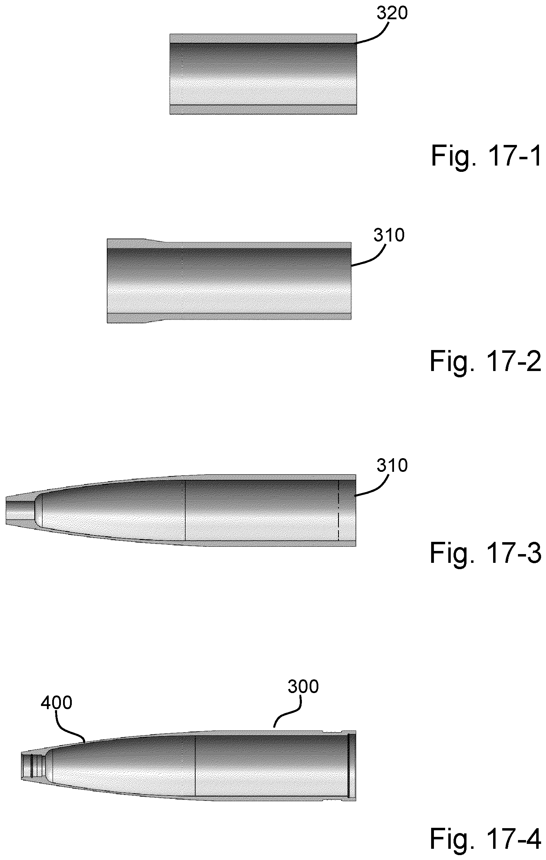

As illustrated in figures 17-1 to 17-4 and figures 19-1 to 19-3 the method may comprise the step of providing a body section workpiece 310 formed from a **first tube preform 320.** The method may comprise the step of forming the body section 300 from the body section workpiece 310 using a first forming process. The first forming process may be a flow forming process. The temperature of the body section workpiece 310 may be controlled to a predetermined body flow forming schedule during the flow forming process. The first forming process may be a radial forging process, and the temperature of the body section workpiece 310 is controlled to a predetermined body radial forging schedule during the radial forging process.

Hence figures 17-1 to 17-4 illustrate steps in a creation of a combined nose and body section according to the method of the present disclosure starting from a tube preform, for example by utilising a radial forging process or a flow forming process, and figures 19-1 to 19-3 illustrate steps in a creation of a body section according to the method of the present disclosure starting from a tube preform, by utilising a radial forging process or a flow forming process.

As illustrated in figures 18-1 to 18-4, the method may comprise the step of providing a body section workpiece 310 formed from a **fourth plate preform 340.** The method may comprise the step of forming the body section 300 from the body section workpiece 310 using a spin forming process in advance of a flow forming process or a radial forging process. The method may comprise a finish machining process to remove a portion of the workpiece material to produce the final (or near final) geometry. The temperature of the body section workpiece 310 may be controlled to a predetermined body spin forming schedule during the spin forming process. The temperature of the body section workpiece 310 may be controlled to a predetermined body flow forming schedule during the flow forming process or controlled to a body radial forging schedule during the radial forging process.

Hence figures 18-1 to 18-4 illustrate steps in a creation of a body section according to the method of the present disclosure starting from a plate preform, for example by utilising a spin forming process as well as a flow forming process or a radial forging process.

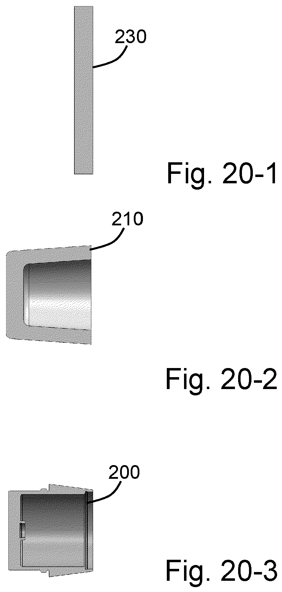

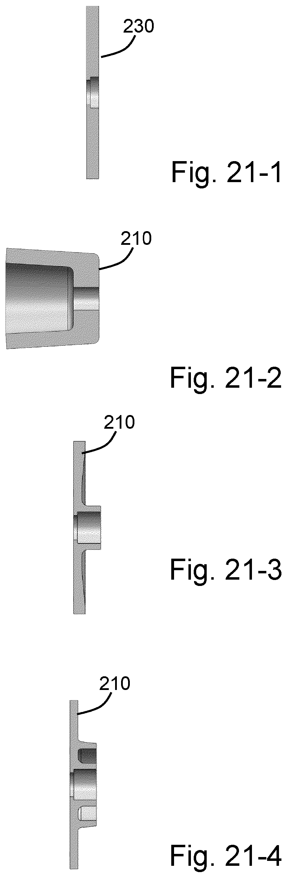

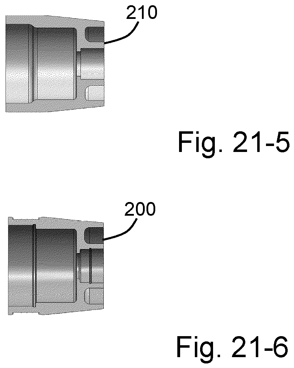

As illustrated in figures 20-1 to 20-3 and figures 21-1 to 21-6 the method may comprise the step of providing a tail section workpiece 210 formed from a **first plate preform 230.** The method may comprise the step of forming the tail section 200 from the tail section workpiece 210 using a hub forming process in advance of a spin forming process. The temperature of the tail section workpiece 210 may be controlled to a predetermined tail hub forming schedule during the hub forming process. The temperature of the tail section workpiece 210 may be controlled to a predetermined tail spin forming schedule during the spin forming process.

Hence figures 20-1 to 20-3 illustrate steps in a creation of a tail section according to the method of the present disclosure starting from a plate preform, for example by utilising a hub forming process and a spin forming process, and figures 21-1 to 21-6 illustrate steps in a creation of a tail section according to the method of the present disclosure starting from a plate preform, for example by utilising a hub forming process and a spin forming process.

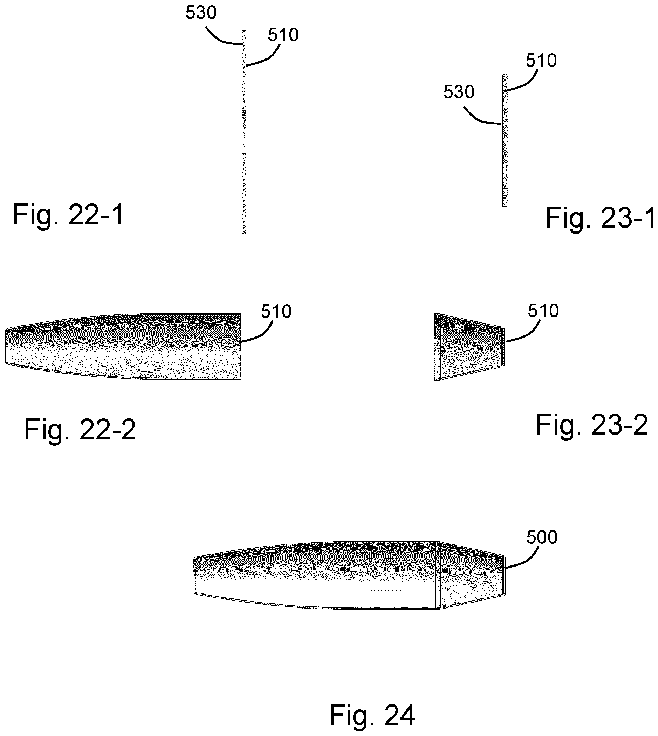

As illustrated in figures 22-1 to 22-2, figures 23-1 to 23-2, the method may comprise the step of providing a liner section workpiece 510 formed from a **third plate preform 530.** The method may comprise the step of forming the liner section 500 from the liner section workpiece 510 using a hub forming process in advance of a spin forming process. The temperature of the liner section workpiece 510 may be controlled to a predetermined liner forming schedule during the hub forming process. The temperature of the liner section workpiece 510 may be controlled to a predetermined liner spin forming schedule during the spin forming process. As illustrated, the liner 500 may be produced in two or more parts (e.g. a front section, as illustrated in figures 22-1 to 22-2, and a rear section, as illustrated in figures 23-1 to 23-2) which are then joined together to form the liner 500 (as illustrated in figure 24). In such an example the front section and rear section may be formed from different plate preforms, each of which are formed by the same process. The front section and the rear section may have different geometries. For example the front section and the rear section may have the same diameter, but may be of different lengths. The front section and rear section may be coupled by any appropriate method, for example by welding.

Hence figures 22-1 to 22-2 illustrate steps in a creation of a first part of a liner section according to the method of the present disclosure starting from a plate preform, for example by utilising a hub forming process and a spin forming process, and figures 23-1 to 23-2 illustrate steps in a creation of a second part of a liner section according to the method of the present disclosure starting from a plate preform, for example by utilising a hub forming process and a spin forming process.

The tube preform 320, 430 may be formed by an extrusion or tube drawing process. Hence the tube preform may be hollow.

Extrusion is a manufacturing process that may be used to create objects with a fixed cross-sectional profile, such as tubes. The raw material, often a thermoplastic or metal, is prepared in the form of pellets or powder. The material is heated until it becomes pliable or molten. The heated material is forced through a die that shapes the material into the desired cross-sectional profile. For example, for tubes, the die has a circular opening. The extruded material is then cooled to solidify its shape.

Tube drawing is a manufacturing process which may be used to produce tubes with precise dimensions and smooth surfaces. A tube or hollow billet maybe used as the starting material. The tube may be cleaned and lubricated to reduce friction during the drawing process. The tube is pulled through a die, which reduces its diameter and elongates it. This results in plastic deformation while the material is stretched and reshaped. The tube may be annealed (heated and then cooled) to relieve internal stresses and improve its mechanical properties.

The plate preform 230, 440 may be circular.

The workpiece may be machined after the preform 230, 320, 430, 440 is formed, the machining being controlled to define a final geometry. Hence the term "workpiece" refers to the article being formed between the stages of it being a preform and the final component.

The shell assembly may be formed of nose section, body section and/or tail section however so formed according to the present disclosure. Hence the shell assembly may be formed of sub-sections formed from plate preforms and/or tube preforms.

The tube preform and/or plate preform may be made of any appropriate material. The tube preform and/or plate preform may be made of any appropriate metal or metal alloy. By way of non-limiting example, the tube preform and/or plate preform may be made from steel, for example steel of a grade of AISI 4140.

The plate preform may have any appropriate thickness. By way of non limiting example, the plate preform may be at least 15mm but no more than 30mm in thickness.

The tube preform may have any appropriate wall thickness. By way of non limiting example, the tube preform may have a wall thickness of at least 40mm but no more than 50mm in thickness.

The schedules of the processes of the method of the present disclosure (e.g. the nose forming schedule, nose flow forming schedule, nose flow forging schedule, nose spin forming schedule, body flow forming schedule, body radial forging schedule, body spin forming schedule, body radial forging schedule, tail hub forming schedule, tail spin forming schedule, liner forming schedule, liner spin forming schedule) may be defined the time taken by one or more steps of the process, and the temperature that the preform, workpiece and/or component section are maintained at during the or each step.

Hence there is provided a method of manufacture of a projectile shell which overcomes the issues of manufacturing processes of the related art (e.g. conventional/traditional forging) by utilising alternative machining processes performed on a plate preform or a tube preform for each section of the shell assembly formed.

The method of the present disclosure enables the manufacture of shells using a combination of equipment which is more readily available, or at least easier to transport and set up where required, than example systems of the related art configured for the manufacture of shells.

Additionally the method of the present disclosure can be easily adapted allowing for greater design and/or production variation than systems of the related art.

The manufacturing technologies combined in the method of the present disclosure enables a reduction in energy usage to produce shell components, and also reduce the amount of material waste compared to examples of the related art since a smaller amount of material (if any) is required to be machined/removed from the plate preform and/or tube preform.

Components manufactured according the method of the present disclosure will have improved mechanical properties because of the thermomechanical work done on the materials during the incremental forming processes.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of manufacture of a projectile shell,
the shell comprising a tail section;
the method comprising the steps of:
providing a tail section workpiece formed from a **first plate preform;**
forming the tail section from the tail section workpiece using a hub forming process in advance of a spin forming process.

2. A method of manufacture as claimed in claim 1 wherein:
the temperature of the tail section workpiece is controlled to a predetermined tail hub forming schedule during the hub forming process; and
the temperature of the tail section workpiece is controlled to a predetermined tail spin forming schedule during the spin forming process.

3. A method of manufacture as claimed in claim 1 or claim 2 wherein the shell comprises a body section;
the method comprising the step of providing a body section workpiece formed from a **first tube preform;** and
forming the body section from the body section workpiece using a first forming process.

4. A method of manufacture as claimed in claim 3 wherein the first forming process is a flow forming process, and the temperature of the body section workpiece is controlled to a predetermined body flow forming schedule during the flow forming process.

5. A method of manufacture as claimed in claim 4 wherein the first forming process is a radial forging process, and the temperature of the body section workpiece is controlled to a predetermined body radial forging schedule during the radial forging process.

6. A method of manufacture as claimed in claim 1 or claims 2 wherein the shell comprises a body section; and
the method comprises the steps of:
providing a body section workpiece formed from a **fourth plate preform;**
forming the body section from the body section workpiece using a spin forming process in advance of a flow forming process or a radial forging process; wherein:
the temperature of the body section workpiece is controlled to a predetermined body spin forming schedule during the spin forming process; and
the temperature of the body section workpiece is controlled to a predetermined body flow forming schedule during the flow forming process or controlled to a body radial forging schedule during the radial forging process.

7. A method of manufacture as claimed in any one of claims 1 to 6 wherein the shell comprises a nose section, and the nose section is formed integrally with the body section.

8. A method of manufacture as claimed in any one of claims 1 to 6 wherein the shell comprises a nose section;
the method comprising the step of providing a nose section workpiece formed from a **second tube preform;**
the method comprising the step of forming the nose section from the nose section workpiece using a second forming process; and
the temperature of the nose section workpiece is controlled to a predetermined nose forming schedule during the second forming process.

9. A method of manufacture as claimed in claim 8 wherein the second forming process is a flow forming process, and
the temperature of the nose section workpiece is controlled to a predetermined nose flow forming schedule during the flow forming process.

10. A method of manufacture as claimed in claim 8 wherein the second forming process is a radial forging process; and
the temperature of the nose section workpiece is controlled to a predetermined nose flow forging schedule during the radial forging process.

11. A method of manufacture as claimed in any one of claims 1 to 6 wherein the shell comprises a nose section; and
the method comprises the steps of:
providing a nose section workpiece formed from a **second plate preform;**
forming the nose section from the nose section workpiece using a hub forming process in advance of a spin forming process; wherein:
the temperature of the nose section workpiece is controlled to a predetermined nose forming schedule during the hub forming process; and
the temperature of the nose section workpiece is controlled to a predetermined nose spin forming schedule during the spin forming process.

12. A method of manufacture as claimed in any one of claims 1 to 11 wherein the shell comprises a liner section for being located within the body section; and
the method comprises the steps of:
providing a liner section workpiece formed from a **third plate preform** forming the liner section from the liner section workpiece using a hub forming process in advance of a spin forming process, wherein:
the temperature of the liner section workpiece is controlled to a predetermined liner forming schedule during the hub forming process; and
the temperature of the liner section workpiece is controlled to a predetermined liner spin forming schedule during the spin forming process.

13. A method of manufacture as claimed in claim 3 or claim 8 wherein the tube preform is formed by an extrusion or tube drawing process.

14. A method of manufacture as claimed in claim 1, 11 or 12 wherein the plate preform is circular.

15. A method of manufacture of an as claimed in any one of claims 1 to 14 wherein the workpiece is machined after the preform is formed, the machining being controlled to define a final geometry.
